# EUROPEAN PATENT SPECIFICATION

(11) **EP 2 587 100 B1**
(45) Date of publication and mention of the grant of the patent: **21.06.2017**
(21) Application number: 10853458.7
(22) Date of filing: 17.07.2010
(51) Int. Cl.: F16J 15/18, D04C 1/00, F16J 15/3288, F16J 15/22, F16J 15/10, D04C 1/12, D04C 1/06, D04C 3/00

(54) **JOINTLESS BRAIDED SEALING RING AS WELL AS METHOD AND SPECIAL MACHINE FOR PRODUCING SUCH SEALING RING**
VERBINDUNGSLOSER, UMFLOCHTENER DICHTRING SOWIE VERFAHREN UND SPEZIALMASCHINE ZUR HERSTELLUNG SOLCH EINES DICHTRINGS
BAGUE D'ÉTANCHÉITÉ TRESSÉE SANS ÉPISSURE AINSI QUE PROCÉDÉ ET MACHINE SPÉCIALE POUR PRODUIRE UNE TELLE BAGUE D'ÉTANCHÉITÉ

(30) Priority: 23.06.2010 CN 201010207282
(43) Date of publication of application: 01.05.2013
(73) Proprietor: Nanyang Xingzhi Patent Technology Service Co., Ltd, Nanyang Henan 473000 (CN)
(72) Inventor: WEN, Qigao, Nanyang Henan 474500 (CN); WEN, Qianqian, Nanyang Henan 474500 (CN)
(74) Representative: Schultheiss & Sterzel Patentanwälte PartG mbB
(86) International application number: PCT/CN2010/075225
(87) International publication number: WO 2011/160318

(56) References cited:
- EP-B1- 0 815 304
- CN-Y- 2 837 329
- FR-A5- 2 087 356
- GB-A- 962 150
- US-A- 4 100 835
- US-A- 4 371 180
- US-A- 5 358 262

## Description

### FIELD OF THE INVENTION

The present invention relates to the braided sealing ring technical field, in particular to an jointless braided sealing ring, its production method, and special equipment.

### BACKGROUND OF THE INVENTION

In the sealing material industry, the braided sealing material is widely applied to various technical fields. The common seal materials include aramid, polytetrafluoroethylene, polyimide, carbon fibers, flexible graphite, ramie and so on. The range of applications involves sealing parts with a round, square, oval, and a variety of polygons closed surface. Especially in some particularly important seal place which involves significant safety under high temperature and high pressure environment, braided sealed ring play a more important role. Under normal circumstances, when the braided seals, a circular knitting machine or a square-knitting machine is usually used first according to the need of the sealing, the sealing fibers are braided into a certain diameter of the rope-like fibrous structure, and then upon request, strand-like sealing material are cut into a section of the length unit, then the starting and end of this length unit are both connected to form a closed ring body, i.e. seal. Several common ring, such as monolayer lap, double lap, sockets are formed, and each joint approach of which are required to joint to the overall shape of the seal ring, performance impact as small as possible, but one unavoidable problem is that no matter how improved, the methods and techniques of its joint is always the weakest link in the structure of the entire sealing ring in terms of strength, and other parts of the joint is always apparent inconsistency of the sealing performance in structure, which affects sealing properties and its service life. Especially in large power equipment, high-temperature melting and continuous production line, nuclear facilities, spacecraft, large vessels, heavy industrial equipment, high precise, advanced field, high temperature, high pressure, strong wear, strong corrosion site appear due to the sealing material. The problems arising from the discontinuation, downtime, outage, and the replacement of the seals will not only prompt equipment manufacturers to suffer from a significant loss, the impact of large-scale projects run also lead to serious malignant safety accidents. Documents US 5358262 A and EP 0815304 B1 disclose a sealing which have to be jointed in order to achieve a sealing ring.

### SUMMARY OF THE INVENTION

The present invention provides a jointless braided sealing ring with a greatly improved life and improved sealing performance, its production method and special equipment.

A jointless braided sealing ring is provided, which adopts a multi-layers braided structure comprising a number of continuously sleeved ring layers arranged from inside to outside in its section, wherein the first braided ring layer is used as a base layer, the tail end of the first braided ring layer is sleeved on the starting end of the first braided ring layer and serves as the starting end of the second braided ring layer to implement continuously braiding without any interruption, the tail end of the second braided ring layer is sleeved on the starting end of the second braided ring layer and serves as the starting end of the third braided ring layer, the third braided ring layer is sleeved on the second braided ring layer, ..., and the resulting Nth braided ring layer is sleeved on the (N-1)th braided ring layer.

The tail end of the outermost braided ring layer is superposed with the starting end of the innermost braided ring layer.

A circle for defining the circumference of ring body is provided within the braided sealing ring.

A method for producing a jointless braided sealing ring is provided, which comprises the following steps:
a. a circle for defining the circumference of ring body is sleeved on the braiding area of a special equipment, the starting end of the braided fiber is fixed on the circle for defining the circumference of ring body based on the circle for defining the circumference of ring body, and start to braid in a form of sleeving;
b. a device for fixing braided fiber bodies is removed prior to the completion of the first braided ring layer;
c. after the first braided ring layer braiding is completed, subsequent braided ring layer is sleeved on the starting end of the first braided ring layer, to start the braiding of the second braided ring layer;
d. after the completion of the second braided ring, the third braided ring layer is sleeved on the second braided ring layer, ..., after the completion of the (N-1)th braided ring, the resulting Nth braided ring layer is sleeved on the (N-1)th braided ring layer;
e. the sealing ring is removed from the special equipment until the number of the braided ring layers meets the requirements, and is trimmed and packaged as desired, to complete the production of the braided sealing ring.

A special equipment for producing a jointless braided sealing ring is provided, which comprises a rack, a power mechanism, a transmission mechanism, a braiding spindle, a braiding track, a spindle movement mechanism, and a braiding density adjustment mechanism, wherein the power mechanism is connected to the spindle moving mechanism through the transmission mechanism, the braiding spindle is provided within the braiding track, the lower end of this braiding spindle is connected to the spindle moving mechanism, and a opening is disposed across the inside and outside of the track, the opening disposed across the inside and outside of the track comprises a removable block and a rail body connection mechanism.

The novel jointless braided sealing ring of this invention adopts a multi-layers braided structure comprising a number of continuously sleeved ring layers arranged from inside to outside in its section, wherein the first braided ring layer is used as the core of the ring, the tail end of the first braided ring layer is sleeved on the starting end of the first braided ring layer and serves as the starting end of the second braided ring layer to implement continuously braiding without any interruption, the tail end of the second braided ring layer is sleeved on the starting end of the second braided ring layer and serves as the starting end of the third braided ring layer, the third braided ring layer is sleeved on the second braided ring layer, ..., and the resulting Nth braided ring layer is sleeved on the (N-1)th braided ring layer. The N braided ring layers have (N-1) continuous and integral braided ring layers, and the tail end of the outermost braided ring layer is superposed with the starting end of the innermost braided ring layer. The aspects mentioned above substantially eliminate the various problems resulting from joints, and effectively improve the knitting of the service life of the seal ring and sealing effect. The provision of defining ring within the sealing ring ensure the machining seal ring dimensional to be accuracy, solve the technical difficulties in the knitting and shaping process, and the problem that seal ring is easily deformed. Setting of the opening disposed across the inside and outside of the track allow the placement of the circle for defining the circumference of ring body convenient in a removable manner. After the placement, a detachable block can be mounted to complete assembling and use of the machine, while braided seal ring can be also easily removed after the completion of the processing.

### BRIEF DESCRIPTION OF THE DRAWINGS

In the following, the present invention will be further described in conjunction with the accompanying drawings:
Figure 1 is a sectional schematic structural view of the jointless braided sealing ring according to the present invention;
Figure 2 is a schematic structural view of the jointless braided sealing ring according to the present invention along its horizontal section;
Figure 3 is an enlarged view of a connecting portion without interruption of the jointless braided sealing ring according to the present invention;
Figure 4 is a schematic block diagram of special equipment for producing the jointless braided sealing ring according to the present invention.

### DETAILED DESCRIPTION OF THE INVENTION

### Embodiment 1

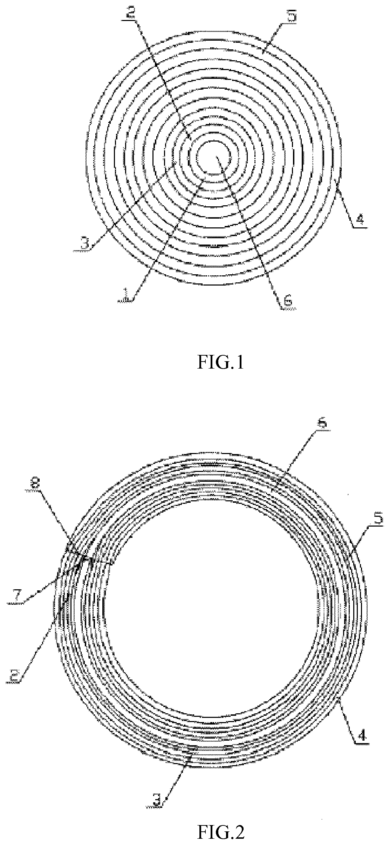

As shown in Figures 1, 2, and 3, a jointless braided sealing ring is provided, which adopts multi-layers braided structure comprising a number of continuously sleeved ring layers arranged from inside to outside in its section, wherein the first braided ring layer 1 is used as a base layer, the tail end of the first braided ring layer 1 is sleeved on the starting end of the first braided ring layer 1 and serves as the starting end of the second braided ring layer 2 to implement continuously braiding without any interruption, the tail end of the second braided ring layer 2 is sleeved on the starting end of the second braided ring layer 2 and serves as the starting end of the third braided ring layer 3, the third braided ring layer 3 is sleeved on the second braided ring layer 2,..., and the Nth braided ring layer 4 is sleeved on the (N-1)th braided ring layer 5. Nth braided ring layer is the outermost layer, and n is a positive integer.

The tail end 8 of the Nth braided ring layer 4 is superposed with the starting end 7 of the first braided ring layer, that is, the outermost braided ring layer is superposed with the starting end of the innermost braided ring layer. This superposition can allow the braided seal ring generated to have a more uniform and reasonable shape, better performance, greater reliability, and longer life.

A circle 6 for defining the circumference of ring body is provided within the braided sealing ring. The length of the circle for defining the circumference of ring body depends on the circumference of the braided sealing ring and the material of which may be metal or metalloid less prone to deformation, such as wires welded into the ring.

### Embodiment 2

As shown in Figures 1, 2, and 3, a jointless braided sealing ring is provided, which adopts multi-layers braided structure comprising a number of continuously sleeved ring layers arranged from inside to outside in its section, wherein the a circle 6 for defining the circumference of ring body provided within the braided sealing ring is used as a base layer, the tail end of the first braided ring layer 1 is sleeved on the starting end of the first braided ring layer 1 and serves as the starting end of the second braided ring layer 2 to implement continuously braiding without any interruption, the tail end of the second braided ring layer 2 is sleeved on the starting end of the second braided ring layer 1 and serves as the starting end of the third braided ring layer 3, the third braided ring layer 3 is sleeved on the second braided ring layer 2, ..., and the Nth braided ring layer 4 is sleeved on the (N-1)th braided ring layer 5. The Nth braided ring layer 4 is the outermost layer, and n is a positive integer.

The tail end 8 of the Nth braided ring layer 4 is superposed with the starting end 7 of the first braided ring layer, that is, the outermost braided ring layer is superposed with the starting end of the innermost braided ring layer. This superposition can allow resulting the braided seal ring to have a more uniform and reasonable shape, better performance, greater reliability, and longer life.

As shown in Figures 1, 2, and 3, a method for producing a jointless braided sealing ring is provided, which comprises the following steps:
a. a opening in the special equipment for producing a jointless braided sealing ring is opened, that is, a removable block 18 is removed, and a circle 6 for defining the circumference of ring body is sleeved on the braiding area 20 of special equipment, a removable block 19 is installed, the starting end of the braided fiber is fixed on the circle 6 for defining the circumference of ring body based on the circle 6 for defining the circumference of ring body, and start to braid in a form of sleeving;
b. a device for fixing braided fiber is removed prior to the completion of the first braided ring layer 1, i.e. during the braiding of the first braided ring layer, and start to braid the second braided ring layer 2. In practice, a section of the fiber can be cut out;
c. after the first braided ring layer braiding is completed, subsequent braided ring layer 3 is sleeved on the starting end of the first braided ring layer 1, to start the braiding of the second braided ring layer.
d. after the completion of the second braided ring layer 2, the third braided ring layer 3 is sleeved on the second braided ring layer 2, ..., after the completion of the (N-1)th braided ring layer 5, the Nth braided ring layer 4 is sleeved on the (N-1)th braided ring layer 5;
e. the sealing ring is removed from the special equipment through opening the removable block 18 on the special equipment until the number of the braided ring layers meets the requirements. The jointless braided sealing ring which can be used without trimming is packaged as a finished product directly. The jointless braided sealing ring required for trimming as desired is trimmed and packaged to complete the production of braided sealing ring.

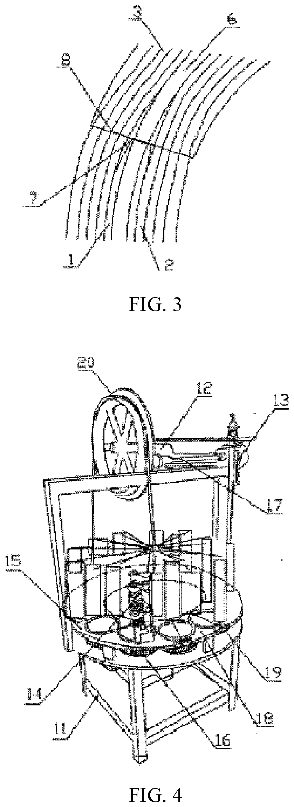

As shown in in Figures 4, a special equipment for producing a jointless braided sealing ring is provided, which comprises a rack 12, a power mechanism 12, a transmission mechanism 13, a braiding spindle 14, a braiding track 15, a spindle movement mechanism 16, a braiding density adjustment mechanism 17, wherein the power mechanism 12 is connected to the spindle moving mechanism 16 through the transmission mechanism 13, the braiding spindle 14 is provided within the braiding track 15, the lower end of this braiding spindle is connected to the spindle moving mechanism 16, and a opening is disposed across the inside and outside of the track 15.

Said opening is disposed across the inside and outside of the track 15 includes a removable block 18 and a rail body connecting mechanism 19. Removable block 18 and rail body connecting mechanism 19 are used conjointly to remove or install removable block 18, and this removing facilitates the circle 6 for defining the circumference of ring body to be installed the circumference of the ring body is limited circle 6 subsequently. The jointless ring is removed at the end. The installation of the removable block 18 can ensure that the entire machine is working properly.

The jointless braided sealing ring of this invention adopts a multi-layers braided structure comprising a number of continuously sleeved ring layers arranged from inside to outside in its section, wherein the first braided ring layer is used as the core of the ring, the tail end of the first braided ring layer is sleeved on the starting end of the first braided ring layer and serves as the starting end of the second braided ring layer to implement continuously braiding without any interruption, the tail end of the second braided ring layer is sleeved on the starting end of the second braided ring layer and serves as the starting end of the third braided ring layer, the third braided ring layer is sleeved on the second braided ring layer,..., and the resulting Nth braided ring layer is sleeved on the (N-1)th braided ring layer. The N braided ring layers have (N-1) continuous and integral braided ring layers, and the tail end of the outermost braided ring layer is superposed with the starting end of the innermost braided ring layer. The aspects mentioned above substantially eliminate the various problems resulting from joints, and effectively improve the knitting of the service life of the seal ring and sealing effect. The provision of defining ring within the sealing ring ensure the machining seal ring dimensional to be accuracy, solve the technical difficulties in the knitting and shaping process, and the problem that seal ring is easily deformed. Setting of such opening disposed across the inside and outside of the track allow for the placement of the circle for defining the circumference of ring body conveniently in a removable manner. After the placement, a detachable block can be mounted to complete assembling and use of the machine, while braided seal ring can be also easily removed after the completion of the processing.

## Claims

1. A jointless braided sealing ring, which adopts a multi-layers braided structure comprising a number of continuously sleeved ring layers arranged from inside to outside in its section, wherein the first braided ring layer (1) is used as a base layer, the tail end of the first braided ring layer (1) is sleeved on the starting end of the first braided ring layer (1) and serves as the starting end of the second braided ring layer (2) to implement continuously braiding without any interruption, the continuously braided second braided ring layer (2) is sleeved on the first braided ring layer (1), the tail end of the second braided ring layer (2) is sleeved on the starting end of the second braided ring layer (2) and serves as the starting end of the third braided ring layer (3), the third braided ring layer (3) is sleeved on the second braided ring layer (2), ..., and the Nth braided ring layer (4) is sleeved on the (N-1)th braided ring layer (5).

2. A jointless braided sealing ring as claimed in claim 1, wherein the tail end (8) of the outermost braided ring layer (4) is superposed with the starting end of the innermost braided ring layer (7).

3. A jointless braided sealing ring as claimed in claim 2, wherein a circle for defining the circumference of ring body (6) is provided within the braided sealing ring.

4. A method for producing a jointless braided sealing ring, which comprises the following steps:
a. a circle for defining the circumference of ring body (6) is sleeved on the braiding area (20) of a special equipment, the starting end of the braided fiber is fixed on the circle for defining the circumference of ring body (6) based on the circle for defining the circumference of ring body (6), and start to braid in a form of sleeving;
b. a device for fixing braided fiber bodies is removed prior to the completion of the first braided ring layer (1);
c. after the first braided ring layer braiding (1) is completed, subsequent braided ring layer is sleeved on the starting end of the first braided ring layer (1), to start the braiding of the second braided ring layer (2);
d. after the completion of the second braided ring (2), the third braided ring layer (3) is sleeved on the second braided ring layer (2), ..., after the completion of the (N-1)th braided ring (5), the resulting Nth braided ring layer (4) is sleeved on the (N-1)th braided ring layer (5);
e. the sealing ring is removed from the special equipment until the number of the braided ring layers meets the requirements, and is trimmed and packaged as desired, to complete the production of the braided sealing ring.

5. A special equipment for producing a jointless braided sealing ring as claimed in claim 1, which comprises a rack (11), a power mechanism (12), a transmission mechanism (13), a braiding spindle (14), a braiding track (15), a spindle movement mechanism (16), and a braiding density adjustment mechanism (17), wherein the power mechanism (12) is connected to the spindle moving mechanism (16) through the transmission mechanism (13), the braiding spindle (14) is provided within the braiding track (15), the lower end of this braiding spindle is connected to the spindle moving mechanism (16), and a opening is disposed across the inside and outside of the track (15), the opening disposed across the inside and outside of the track comprises a removable block (18) and a rail body connection mechanism (19).

## Patentansprüche

1. Geflochtener Dichtungsring ohne Verbindungsstelle, der eine mehrschichtige Geflechtstruktur annimmt, die eine Anzahl kontinuierlich aufgeschobener Ringschichten aufweist, die in seinem Schnitt vom Inneren zum Äußeren angeordnet sind, wobei die erste geflochtene Ringschicht (1) als eine Basisschicht verwendet wird, das hintere Ende der ersten geflochtenen Ringschicht (1) auf das Anfangsende der ersten geflochtenen Ringschicht (1) aufgeschoben ist und als das Anfangsende der zweiten geflochtenen Ringschicht (2) zum Realisieren von kontinuierlichem Flechten ohne Unterbrechung dient, wobei die kontinuierlich geflochtene zweite geflochtene Ringschicht (2) auf die erste geflochtene Ringschicht (1) aufgeschoben ist, das hintere Ende der zweiten geflochtenen Ringschicht (2) auf das Anfangsende der zweiten geflochtenen Ringschicht (2) aufgeschoben ist und als das Anfangsende der dritten geflochtenen Ringschicht (3) dient, die dritte geflochtene Ringschicht (3) auf die zweite geflochtene Ringschicht (2) aufgeschoben ist, ... und die n-te geflochtene Ringschicht (4) auf die (n-1)-te geflochtene Ringschicht (5) aufgeschoben ist.

2. Geflochtener Dichtungsring ohne Verbindungsstelle nach Anspruch 1, wobei das hintere Ende (8) der äußersten geflochtenen Ringschicht (4) mit dem Anfangsende der innersten geflochtenen Ringschicht (7) überlagert ist.

3. Geflochtener Dichtungsring ohne Verbindungsstelle nach Anspruch 2, wobei in dem geflochtenen Dichtungsring ein Kreis zum Definieren des Umfangs von Ringkörper (6) bereitgestellt ist.

4. Verfahren zum Herstellen eines geflochtenen Dichtungsrings ohne Verbindungsstelle, das die folgenden Schritte aufweist:
a. ein Kreis zum Definieren des Umfangs von Ringkörper (6) wird auf den Flechtbereich (20) einer speziellen Anlage aufgeschoben, wobei das Anfangsende der geflochtenen Faser an dem Kreis befestigt wird, um den Umfang des Ringkörpers (6) auf Basis des Kreises zum Definieren des Umfangs des Ringkörpers (6) zu definieren und mit dem Flechten in einer Schlauchform zu beginnen;
b. eine Vorrichtung zum Befestigen geflochtener Faserkörper wird vor Abschluss der ersten geflochtenen Ringschicht (1) entfernt;
c. nachdem das Flechten der ersten geflochtenen Ringschicht (1) abgeschlossen worden ist, wird die nachfolgende geflochtene Ringschicht (1) auf das Anfangsende der ersten geflochtenen Ringschicht (1) aufgeschoben, um das Flechten der zweiten geflochtenen Ringschicht (2) zu beginnen;
d. nach Abschluss des zweiten geflochtenen Rings (2) wird die dritte geflochtene Ringschicht (3) auf die zweite geflochtene Ringschicht (2) aufgeschoben, ..., nach Abschluss des (n-1)-ten geflochtenen Rings (5) wird die resultierende n-te geflochtene Ringschicht (4) auf die (n-1)-te geflochtene Ringschicht (5) aufgeschoben;
e. der Dichtungsring wird von der speziellen Anlage entfernt, bis die Anzahl der geflochtenen Ringschichten den Anforderungen entspricht, und wird nach Wunsch beschnitten und verpackt, um die Herstellung des geflochtenen Dichtungsrings abzuschließen.

5. Spezielle Anlage zur Herstellung eines geflochtenen Dichtungsrings ohne Verbindungsstelle nach Anspruch 1, die ein Gestell (11), einen Antriebsmechanismus (12), einen Kraftübertragungsmechanismus (13), eine Flechtspindel (14), eine Flechtbahn (15), einen Spindelbewegungsmechanismus (16) und einen Mechanismus zur Einstellung der Flechtdichte (17) aufweist, wobei der Antriebsmechanismus (12) durch den Kraftübertragungsmechanismus (13) mit dem Spindelbewegungsmechanismus (16) verbunden ist, die Flechtspindel (14) in der Flechtbahn (15) bereitgestellt ist, das untere Ende dieser Flechtspindel mit dem Spindelbewegungsmechanismus (16) verbunden ist und eine Öffnung über die Innen- und Außenseite der Bahn (15) angeordnet ist, wobei die über die Innen- und Außenseite der Bahn angeordnete Öffnung einen abnehmbaren Block (18) und einen Schienenkörperverbindungsmechanismus (19) aufweist.

## Revendications

1. Bague d'étanchéité tressée sans épissure qui adopte une structure tressées en multicouches comprenant un nombre de couches de bagues emmanchées de manière continue agencées à partir de l'intérieur jusqu'à l'extérieur dans sa section, où la première couche de bague tressée (1) est utilisée en tant que couche de base, l'extrémité caudale de la première couche de bague tressée (1) est emmanchée sur l'extrémité de départ de la première couche de bague tressée (1) et sert en tant qu'extrémité de départ de la deuxième couche de bague tressée (2) pour mettre en oeuvre le tressage sans aucune interruption de manière continue, la deuxième couche de bague tressée (2) tressée de manière continue est emmanchée sur la première couche de bague tressée (1), l'extrémité caudale de la deuxième couche de bague tressée (2) est emmanchée sur l'extrémité de départ de la deuxième couche de bague tressée (2) et sert d'extrémité de départ de la troisième couche de bague tressée (3), la troisième couche de bague tressée (3) est emmanchée sur la deuxième couche de bague tressée (2), ...., et la N^{ième} couche de bague tressée (4) est emmanchée sur la (N - 1)^{ième} couche de bague tressée (5).

2. Bague d'étanchéité tressée sans épissure selon la revendication 1, dans laquelle l'extrémité caudale de la couche de bague tressée (4) la plus à l'extérieur est superposée avec l'extrémité de départ de la couche de bague tressée (7) la plus à l'intérieur.

3. Bague d'étanchéité tressée sans épissure selon la revendication 2, dans laquelle un cercle pour définir la circonférence d'un corps circulaire (6) est créé à l'intérieur de la bague d'étanchéité tressée.

4. Procédé pour produire une bague d'étanchéité tressée sans épissure, qui comprend les étapes suivantes :
a. un cercle pour définir la circonférence d'un corps de bague (6) est emmanché sur la zone de tressage (20) d'un équipement spécial, l'extrémité de départ de la fibre tressée est fixée sur le cercle pour définir la circonférence du corps de bague (6) sur la base du cercle afin de définir la circonférence du corps de bague (6), et on commence à la tresser sous la forme d'un emmanchement ;
b. un dispositif pour fixer des corps de fibres tressées est enlevé avant l'achèvement de la première couche de bague tressée (1) ;
c. après que le tressage (1) de la première couche de bague tressée soit achevé, une couche de bague tressée suivante est emmanchée sur l'extrémité de départ de la première couche de bague tressée (1) pour commencer le tressage de la deuxième couche de bague tressée (2) ;
d. après l'achèvement de la deuxième bague tressée (2), la troisième couche de bague tressée (3) est emmanchée sur la deuxième couche de bague tressée (2), ..., après l'achèvement du (N - 1)^{ième} anneau tressé, la N^{ième} couche de bague tressée résultante (4) est emmanchée sur la (N - 1)^{ième} couche de bague tressée (5) ;
e. la bague d'étanchéité est enlevée de l'équipement spécial lorsque le nombre de couches de bague tressée satisfait aux exigences, et est coupée et emballée si c'est souhaité, pour achever la production de la bague d'étanchéité tressée.

5. Equipement spécial pour produire une bague d'étanchéité tressée sans épissure selon la revendication 1, qui comprend un chevalet (11), un mécanisme de fonctionnement (12), un mécanisme de transmission (13), une broche de tressage (14), une piste de tressage (15), un mécanisme de déplacement de broche (16), et un mécanisme de réglage de la densité du tressage (17), où le mécanisme de fonctionnement (12) est connecté au mécanisme de déplacement de broche (16) par le biais du mécanisme de transmission (13), la broche de tressage (14) est mise en place dans la piste de tressage (15), l'extrémité inférieure de cette broche de tressage est connectée au mécanisme de déplacement de broche (16), et un orifice est disposé à travers l'intérieur et l'extérieur de la piste (15), l'orifice disposé à travers l'intérieur et l'extérieur de la piste comprend un bloc amovible (18) et un mécanisme de connexion de corps de rail (19).
